(19) **Europäisches Patentamt**

**European Patent Office**

**Office européen des brevets**

(11) **EP 1 703 179 B1**

(12) **EUROPÄISCHE PATENTSCHRIFT**

(45) Veröffentlichungstag und Bekanntmachung des Hinweises auf die Patenterteilung:
**24.09.2008 Patentblatt 2008/39**

(51) Int Cl.:
*F16H 61/12* (2006.01)  *F16H 61/32* (2006.01)

(21) Anmeldenummer: **06014200.7**

(22) Anmeldetag: **10.04.2003**

(54) **Getriebesteuerung und Verfahren zum Kompensieren von Streckenveränderungen bei einer Getriebesteuerung eines automatisierten Getriebes eines Fahrzeuges**

Transmission control system and method for compensating length variations in a control system of an automated vehicle transmission

Commande de boîte de vitesses et procédé pour compenser des variations de longueur dans une commande de transmission automatisée de véhicule

(84) Benannte Vertragsstaaten:
**AT BE BG CH CY CZ DE DK EE ES FI FR GB GR HU IE IT LI LU MC NL PT RO SE SI SK TR**

(73) Patentinhaber: **LuK Lamellen und Kupplungsbau Beteiligungs KG**
**77815 Bühl (DE)**

(30) Priorität: **10.04.2002 DE 10215715**
**30.04.2002 DE 10219255**
**12.11.2002 DE 10252409**

(72) Erfinder:
- **Schuhen, Michael**
**77815 Bühl-Oberweier (DE)**
- **Henneberger, Klaus, Dr.**
**77815 Bühl (DE)**
- **Hauptmann, Marc**
**68649 Gross-Rohrheim (DE)**

(43) Veröffentlichungstag der Anmeldung:
**20.09.2006 Patentblatt 2006/38**

(62) Dokumentnummer(n) der früheren Anmeldung(en) nach Art. 76 EPÜ:
**03720265.2 / 1 497 573**

(56) Entgegenhaltungen:
**DE-A1- 10 038 331     DE-A1- 19 951 953**

**Beschreibung**

Die vorliegende Erfindung bezieht sich auf eine Getriebesteuerung und ein Verfahren zum Kompensieren von Streckenveränderungen bei einer Getriebesteuerung eines automatisierten Getriebes eines Fahrzeuges.

Es hat sich gezeigt, dass insbesondere bei einem automatisierten Schaltgetriebe die Getriebemotoren, wie z. B. Wähl- und Schaltmotoren, in unterschiedlichen Betriebsarten beispielsweise lage- oder drehzahlgeregelt angesteuert werden. Die dafür z. B. in einem Offline-Modus durchgeführten Reglungen basieren üblicherweise auf einfachen physikalischen Modellen der Getriebemotoren und der Aktorik. Diese Modelle werden anhand von Simulationen und Messungen verifiziert. Insbesondere Untersuchungen an einem Prüfstand und an den Fahrzeugen haben jedoch gezeigt, dass ein verändertes Streckenverhalten zu Komforteinbußen und in ungünstigen Fällen sogar zu Fehlfunktionen oder zum Ausfall der Getriebeaktorik führen kann. Mögliche Ursachen für Streckenänderungen sind z. B. fertigungsbedingte Schwankungen der Motorkenngrößen im Neuzustand des Fahrzeuges. Als weitere Ursachen können der Verschleiß und die Alterung der Motoren über die gesamte Lebensdauer oder auch temporär auftretende Temperatureinflüsse genannt werden.

Der nächstliegende bekanntgewordene Stand der Technik ist der DE-A-199 51 953 zu entnehmen.

Der Erfindung liegt die Aufgabe zugrunde, eine Getriebesteuerung und ein Verfahren zum Kompensieren von Streckenveränderungen bei einer Getriebesteuerung eines automatisierten Getriebes eines Fahrzeuges vorzuschlagen, sodass Streckenveränderungen bei der Getriebesteuerung berücksichtigt werden.

Die Aufgabe wird erfindungsgemäß durch ein Verfahren zum Kompensieren von Streckenveränderungen bei einer Getriebesteuerung eines automatisierten Getriebes eines Fahrzeuges gelöst, bei dem jede Streckenveränderung erkannt und ausgeglichen wird.

Um negative Auswirkungen von Streckenveränderungen zu vermeiden, kann gemäß der hier vorgestellten Erfindung eine modellgestützte Strategie zur Kompensation von Streckenänderungen vorgesehen werden, bei deren Anwendung die in der Steuerungssoftware implementierten Reglerparameter und Kraftvorgaben in vorteilhafter Weise nicht adaptiert werden müssen.

Im Rahmen der hier vorgestellten Erfindung wird eine modellgestützte Kompensationsstrategie, insbesondere für Getriebemotoren und für die Aktorik, vorgeschlagen, mit der eine identifizierte Streckenänderung bezüglich eines Referenzmodells ausgeglichen werden kann, ohne dass die in der Software implementierten Parameter und Vorgaben adaptiert werden müssen.

Diese Kompensationsstrategie beinhaltet eine Unterscheidung zwischen temporär auftretenden Temperatur bedingten Streckenänderungen und langfristig wirkenden vom Betrieb und der Hardware abhängigen Änderungen des Streckenverhaltens. Es ist denkbar, dass bei der erfindungsgemäßen Strategie weitere geeignete Aspekte berücksichtigt werden. Beispielsweise kann bei der erfindungsgemäßen Strategie auch eine Adaption der Kompensation an ein verändertes Streckenverhalten, eine Begrenzung der Kompensation und/oder eine Speicherung der langfristig wirkenden Streckenänderungen berücksichtigt werden.

Besonders vorteilhaft ist bei der Kompensationsstrategie nach der hier vorgestellten Erfindung, dass diese auf einfachen parametrischen Modellen der Getriebemotoren und/oder der Aktorik basieren. Die Modellparameter können unter Berücksichtigung vorbestimmter Randbedingungen bevorzugt im Online-Modus während eines Gangwechsels, z.B. im lagegeregelten Betrieb der Getriebemotoren, identifiziert werden. Dafür kann z.B. in die Steuerungssoftware ein geeignetes Parameterschätzverfahren implementiert werden. Für die Identifikation können die kompensierten und beispielsweise auf die maximale Batteriespannung begrenzten Spannungen $U_k$ sowie die gemessenen Getriebemotordrehzahlen n oder dergleichen verwendet werden. Es ist auch möglich, dass dabei andere Parameter und Größen berücksichtigt werden.

Die Abweichungen der identifizierten Modellparameter von den Parametern der Referenzmodelle können theoretisch für die Herleitung einer vollständigen insbesondere dynamischen Kompensationsstrategie verwendet werden. Auf Grund der einfachen Streckenmodelle, der Totzeiten bei der Erfassung der Motordrehzahlen oder dgl., kann allerdings eine teilweise statische Kompensation der Streckenänderungen in mehreren Schritten sinnvoll sein.

Nach einer erfolgreich durchgeführten Identifikation kann zunächst mit den neuen Modellparametern eine neue Streckenverstärkung k in einem ersten Schritt 1 berechnet werden.

In einem zweiten Schritt 2 wird die Streckenverstärkung k mit der schon in der Steuerungssoftware realisierten Temperaturkompensation 7 geeignet korrigiert, welche vor der Begrenzung der Lagereglerspannungen $U_R$, welche als Stellgrößen verwendet werden, auf die maximale Batteriespannung und der Umrechnung auf z.B. PWM-Größen (Pulsweitenmodulationsgrößen) erfolgt. Die durchgeführte Korrektur hat die Aufgabe, dass die langfristig wirkenden Streckenänderungen von den temperaturbedingten und temporär auftretenden Änderungen getrennt sowie die in der Temperaturkompensation 7 enthaltenden Unsicherheiten ausgeglichen werden. Eine mögliche Unsicherheit kann z. B. darin bestehen, dass die Kompensation auf der Grundlage der Getriebetemperatur erfolgt, welche in der Steuerungssoftware mit einem Temperaturmodell berechnet wird. Die Temperaturverhältnisse an den Getriebemotoren sind unter Umständen nicht bekannt. Aus regelungstechnischer Sicht kann die Temperaturkompensation somit nur die Funktion einer Vorsteuerung übernehmen, mit der aber bei einem Ausfall der Identifikation zumindest noch in einem gewissen Rahmen temperaturbedingte Streckenänderungen ausgeglichen werden können.

Die in einem dritten Schritt der erfindungsgemäßen Kompensationsstrategie vorgenommene Filterung der Streckenverstärkung $K_1$ dient der Gewichtung neuer Verstärkungswerte und bestimmt somit die Adaptionsgeschwindigkeit der Kompensation an ein verändertes Streckenverhalten, wobei vorzugsweise ein diskreter Filter erster Ordnung verwendet wird. Es ist jedoch auch möglich, andere Filter zur Filterung bei der erfindungsgemäßen Kompensationsstrategie zu verwenden. Die Filterkonstante kann z. B. konstant sein oder auch in Abhängigkeit von anderen Randbedingungen vorgegeben werden. Beispielsweise kann als Randbedingung die Temperatur, deren Änderung oder dgl. verwendet werden.

Der gefilterte Verstärkungswert $K_2$ kann anschließend auf einen definierten Wertebereich begrenzt werden, welches in einem vierten Schritt durchgeführt wird. Damit können Aspekte, wie die Robustheit der Regelung oder der Schutz der Aktorik und der Getriebemotoren geeignet berücksichtigt werden. Die Robustheit der Regelung kann z. B. beeinträchtigt werden, wenn die Dynamik der Strecke erhöht wird; dies bedeutet, dass das System empfindlicher gegenüber Störungen ist und gleichzeitig die Streckenverstärkung durch die Kompensation erhöht wird, welches einer zusätzlichen Anregung des Systems entspricht.

Die Initialisierung aus der durchgeführten Begrenzung resultierenden Kompensationsverstärkung $K_c$ kann vorzugsweise einmalig nach der Inbetriebnahme mit der Streckenverstärkung $K_r$ des Referenzmodells erfolgen. Die sich während des Betriebs normalerweise ändernde Kompensationsverstärkung kann im Rahmen eines fünften Schrittes z. B. bei dem Zustand "Zündung aus" vorzugsweise in dem sogenannten EEProm gespeichert werden. Dieser gespeicherte Wert kann z. B. als Startwert beim nächsten Zustand "Zündung ein" verwendet werden. Temperaturbedingt auftretende Streckenänderungen zwischen den Zuständen "Zündung aus" und "Zündung ein" können dann durch die Temperaturkompensation ausgeglichen werden. Zur Berücksichtigung der Unsicherheiten in der Temperaturkompensation können zudem Möglichkeiten vorgesehen werden, bei denen vorzugsweise der Verstärkungswert nur dann bei dem Zustand "Zündung aus" gespeichert wird, wenn die Getriebetemperatur innerhalb eines definierten Bereichs liegt und/oder eine bestimmte, vom Wert der Filterkonstante abhängige Anzahl erfolgreich durchgeführter Identifikationen vorliegen. Es sind auch andere Möglichkeiten zur Berücksichtigung der Unsicherheiten in der Temperaturkompensation denkbar.

In einem sechsten, letzten Schritt des erfindungsgemäßen Verfahrens kann z. B. die eigentliche statische Kompensation der Lagereglerspannung $U_R$ durchgeführt werden. Die kompensierte Spannung $U_c$ kann dabei aus dem Produkt von $U_R$ und dem Verhältnis $K_R/K_c$ resultieren.

Um die erfindungsgemäße Strategie weiter zu verbessern, kann vorgesehen sein, dass weitere geeignete Schritte in die erfindungsgemäße Strategie integriert werden oder auch eine andere beliebige Kombination der genannten Schritte vorgesehen wird.

Die hier vorgestellte Kompensationsstrategie kann bevorzugt bei sämtlichen Fahrzeugen verwendet werden, welche ein automatisiertes Schaltgetriebe (ASG) aufweisen. Es ist auch denkbar, dass die vorliegende Strategie bei Fahrzeugen mit anderen Getrieben verwendet wird.

Besonders vorteilhaft ist bei der hier vorgestellten Strategie, dass die Kompensation mit einer geeigneten Adaptation der Reglerparameter kombiniert werden kann. Es ist auch denkbar, dass die Adaption der Reglerparameter oder dergleichen von der durchgeführten Kompensation unabhängig voneinander durchgeführt wird.

Im Rahmen einer vorteilhaften Variante der vorliegenden Erfindung kann eine Online-Identifikation, für die Modelle jedes Getriebemotors, insbesondere mit einer robusten Fehlererkennung der Inkrementalwegmessung, vorgesehen sein.

Gemäß der hier vorgestellten Erfindung kann vorzugsweise durch eine geeignete Softwaremaßnahme eine Online-Identifikation für die bereits implementierten Modelle, z.B. eines ASG-Getriebemotors, eine ausreichende Qualität der Fehlererkennung für die Inkrementalwegmessung gewährleistet werden. Dabei kann vorgesehen sein, dass während der Schalt- und Wählvorgänge, insbesondere im lagegeregelten Modus, die Signale der Eingangsspannung und/oder die Drehzahl der Getriebemotoren verwendet wird, um im Online-Zustand das Streckenverhalten der Motoren zu identifizieren.

Vorzugsweise kann z. B. ein diskretes Motormodell für die Getriebemotoren verwendet werden. Das diskrete Modell kann sich vorzugsweise aus einem PT1-Glied und einem I-Glied oder dergleichen zusammensetzen. Dabei werden die Eingangsspannung $u_{k-1}$ und die Motordrehzahl $N_{k-1}$ eines Lageregler-Interrupt zuvor erfasst und als Eingangsgrößen des PT1-Modells verwendet. Die aktuell modellierte Motordrehzahl $n_k$ kann in dem Integrator (I-Glied) in entsprechende Motorinkremente $x_k$ umgerechnet werden.

Daraus ergibt sich für das PT1-Glied: $n_k = A \cdot n_{k-1} + B \cdot u_{k-1}$

Für das I-Glied (Integrator) ergibt sich folgende Gleichung: $x_k = x_{k-1} + K \cdot T_A \cdot n_k$

Wird der Parameter K (I-Glied) als eine konstante Übersetzung zwischen dem Drehwinkel des Motors und den Motorinkrementen dargestellt, können die Parameter A und B des PT1-Modells z. B. nicht konstant sein. Sie können sich auf Grund von Fertigungsstreuung, Betriebstemperatur, Lebensdauer der Motoren oder dgl. entsprechend verändern.

Dies bedeutet, dass, um eine robuste Modellierung zu realisieren, die Parameter A und B während des Betriebes im Fahrzeug geeignet identifiziert werden. Dabei kann die Identifikationsmethode des sogenannten Least-Square-Verfahrens oder dergleichen verwendet werden. Dort werden im lagegeregelten Zustand die Motordrehzahl n und die Motorspannung u in jedem Lageregler-Interrupt, von z. B. 5ms, eingelesen und es werden entsprechend der nachfolgenden Gleichungen die multiplizierten Werte aufsummiert:

$$\Phi_{nn}(0) = \sum_{0}^{N-1} n(i) \cdot n(i)$$

$$\Phi_{un}(0) = \sum_{0}^{N-1} n(i) \cdot u(i)$$

$$\Phi_{uu}(0) = \sum_{0}^{N-1} u(i) \cdot u(i)$$

$$\Phi_{nn}(1) = \sum_{1}^{N} n(i) \cdot n(i-1)$$

$$\Phi_{un}(1) = \sum_{1}^{N} n(i) \cdot u(i-1)$$

Bei den vorgenannten Gleichungen richtet sich die Zahl N der Summe nach der Dauer des lagegeregelten Modus während einer Schaltung. Demzufolge entspricht die Zahl N der Anzahl der Lageregler-Interrupts innerhalb des lagegeregelten Modus während eines Gangwechsels.

Beispielsweise kann vorgesehen sein, dass bei Beendigung des lagegeregelten Schalt- und Wählvorganges die berechneten Zwischengrößen verwendet werden, um die Parameter A und B des PT1-Glieds zu ermitteln. Dazu können vorzugsweise folgende Gleichungen verwendet werden:

$$A = \frac{-\Phi_{uu}(0) \cdot \Phi_{nn}(1) + \Phi_{un}(0) \cdot \Phi_{un}(1)}{\Phi_{uu}(0) \cdot \Phi_{nn}(0) - [\Phi_{un}(0)]^2}$$

$$B = \frac{-\Phi_{un}(0) \cdot \Phi_{nn}(1) + \Phi_{nn}(0) \cdot \Phi_{un}(1)}{\Phi_{uu}(0) \cdot \Phi_{nn}(0) - [\Phi_{un}(0)]^2}$$

Gemäß einer Weiterbildung der vorliegenden Erfindung kann ein vorbestimmter Ablauf der vorgeschlagenen Identifikation vorgesehen sein. Um den Ablauf gezielt steuern zu können und zu überwachen, können verschiedene Zustände der Identifikation definiert werden. Die einzelnen Zustände während einer Identifikation können im sogenannten Hand-Shake-Verfahren durchlaufen werden.

Für die Zustandsabläufe der Identifikationsstrategie sind entsprechenden Übergangsbedingungen angegeben.

Um die oben genannten Fehler möglichst frühzeitig zu erkennen, kann eine Modellierung der ASG-Getriebeaktoren implementiert werden. Diese möglichen Modelle können z.B. aus den Motorspannungen die zu erwartenden Drehzahlen und Rotorstellungen ermitteln und somit die modellierten Größen mit denen der Inkrementalwegmessung entsprechend vergleichen. Beispielsweise werden während der Schalt- und Wählvorgänge die gemessenen Motorinkremente mit den modellierten Inkrementen verglichen. Wenn die Differenz der beiden Größen eine vorbestimmte Schwelle überschreitet, kann ein Fehler der Inkrementalwegmessung angenommen werden. Dabei wird das Vertrauensmaß auf 1 (Guess) gesetzt und eine Neutralreferenzfahrt angefordert, welche bei erfolgreichem Abgleich das Vertrauensmaß wieder auf 2 (Coarse) setzt. Bei erkanntem Fehler kann ein Eintrag in den Fehlerspeicher erfolgen. Es ist möglich, dass die vorgeschlagene Fehlerstrategie geeignet modelliert wird, um die Fehlererkennung weiter zu verbessern.

Bei Messungen in der Klimakammer hat sich gezeigt, dass die Modelle der Getriebemotoren besonders bei sehr tiefen Temperaturen, z.B. bei etwa -30° Celsius, zu ungenau sind. Bei diesen Temperaturen können Fehlererkennungen auftreten, obwohl objektiv kein Fehler der Inkrementalmessung vorlag. Grund dafür kann die Veränderung im Streckenverhalten der Getriebeaktorik bei Temperaturänderungen sein. Darauf kann das bisherige Modell nicht eingestellt werden, da die Modellparameter konstant sind.

Derselbe Effekt liegt vor, wenn Getriebemotoren verwendet werden, die an der äußersten Grenze der Fertigungstoleranzen liegen, da die Bestimmung der Modellparameter auf Basis eines standardisierten Getriebemotors bei normalen Betriebsbedingungen durchgeführt wird. Daraus ergeben sich die Anforderung, dass die Modellparameter an das reale und jeweils vorliegende Streckenverhalten der Getriebeaktorik angepasst werden müssen. Auf diese Weise kann eine langfristig robuste Fehlererkennung der Inkrementalwegmessung realisiert werden.

Bei der Implementierung der vorgeschlagenen Strategie kann vorzugsweise ein Zeitfenster bei der Identifikation vorgesehen sein. Eine Identifikation kann zum einen durchgeführt werden, wenn eine stetige Anregung des Systems, also eine Bestromung der Motoren, erfolgt und zum anderen kann die Identifikation durchgeführt werden, wenn die Bewegung der Getriebeaktorik frei in der Schaltkulisse verläuft. Daher sollte die Identifikation während einer Schaltung zeitlich eingegrenzt werden, da z.B. während des Synchronisierens keine freilaufende Bewegung der Motoren stattfindet und somit das Ergebnis einer Identifikation verfälscht werden könnte. Somit ist das Vorsehen eines Zeitfensters bei der Identifikation besonders vorteilhaft. Es ist auch möglich, die Implementierung auf andere Art und Weise durchzuführen.

Eine weitere Ausgestaltung der vorliegenden Erfindung kann vorsehen, dass vorzugsweise die Stromstärke oder dergleichen, insbesondere bei ASG-Getriebemotoren, z. B. mit einem softwareseitigen Beobachter oder dergleichen abgeschätzt wird.

Gemäß der vorliegenden Erfindung kann vorgesehen sein, dass vorzugsweise durch einen softwareseitigen Beobachter die Ströme der ASG-Getriebemotoren geeignet geschätzt werden und dadurch auch eine softwareseitige Strombegrenzung durchgeführt werden kann. Es ist möglich, dass der Beobachter das Streckenverhalten der Getriebemotoren identifiziert und z. B. die angeforderte Stromstärke über die ermittelten Streckenparameter, die angelegte Spannung und/oder die gemessene Motordrehzahl, entsprechend abschätzt.

Dabei kann das Streckenverhalten der Getriebemotoren z. B. mit Hilfe eines $PT_1$-Modells mit variablen Parametern dargestellt werden, welches der nachfolgenden Gleichung 1 entspricht. Bezüglich der Bewegungsgleichung eines Gleichstrommotors können die Parameter a und b während eines Gangwechsels im lagegeregelten Zustand identifiziert werden:

$$\dot{n} = a \cdot n + b \cdot u \qquad\qquad\text{Gl. 1}$$

wobei

n :  Motordrehzahl
a, b :  Motorparameter
u :  Motorspannung

sind.

Mit den allgemeinen Gleichungen eines Gleichstrommotors unter Vernachlässigung der Induktivität ergeben sich folgende Gleichungen:

$$U = R \cdot l + k_\Phi \cdot \omega \qquad\qquad\text{Gl. 2}$$

R = Ankerwiderstand [$\Omega$]
I = Stromstärke [$A$]

$k_\Phi$ = Motorkonstante [$Vs$]

$\omega$ = Motordrehzahl $\left[\dfrac{1}{s}\right]$

$$J\dot\omega = k_\Phi \cdot l \qquad\qquad\qquad\qquad \text{Gl. 3}$$

J = Motorträgheit
$\omega$ = Motorbeschleunigung

Durch die Umformung, die Gleichsetzung und einem Koeffizientenvergleich mit der Gleichung 1 über die Parameter a und b kann auf die physikalischen Parameter geschlossen werden.

$$\mathbf{a} = -\frac{k_\Phi^2}{J \cdot R} \qquad\qquad\qquad\qquad \text{Gl. 4}$$

$$\mathbf{b} = \frac{60}{2\pi} \cdot \frac{k_\Phi}{J \cdot R} \qquad\qquad\qquad\qquad \text{Gl. 5}$$

Unter der Voraussetzung, dass die Motorträgheit J vorgegeben ist, ergeben sich für das vorgenannte Gleichungssystem nur 2 Unbekannte, nämlich der Ankerwiderstand R und die Motorkonstante k. Auf diese Weise können die physikalischen Parameter über die identifizierten Parameter a und b durch Auflösen der Gleichungen ermittelt werden. Es ergeben sich folgende Gleichungen:

$$|k_\Phi| = \frac{60}{2\pi} \cdot \frac{a}{b} \qquad\qquad\qquad\qquad \text{Gl. 6}$$

$$|R| = \frac{1}{J} \cdot \left(\frac{60}{2\pi}\right)^2 \cdot \frac{a}{b^2} \qquad\qquad\qquad\qquad \text{Gl. 7}$$

$$l = \frac{U - k_\Phi \cdot \dfrac{2\pi}{60}n}{R} \qquad\qquad\qquad\qquad \text{Gl. 8}$$

Somit ist es nun möglich mit den bekannten Größen der Motorspannung U und der Motordrehzahl n die Stromstärke I mit dem erfindungsgemäßen Verfahren abzuschätzen. Auf diese Weise können die Stromspitzen entsprechend erkannt werden und eine entsprechend starke Beanspruchung des Bordnetzes ausgeglichen werden, sodass kein Lichtflackern bei Scheinwerfern oder Tachobeleuchtung auftreten kann.
Die der Erfindung zugrundeliegende Aufgabe kann auch durch eine erfindungsgemäße Getriebesteuerung eines automatisierten Getriebes eines Fahrzeuges, nach Anspruch 41 gelöst werden.
Weitere Vorteile und vorteilhafte Ausgestaltungen ergeben sich aus den Unteransprüchen und den nachfolgend beschriebenen Zeichnungen.
Es zeigen:

Figur 1    ein Blockschaltbild einer möglichen Ausgestaltung des erfindungsgemäßen Verfahrens;

Figur 2    eine detaillierte Darstellung gemäß Figur 1;

Figur 3    ein Blockschaltbild eines Signalflusses in der Getriebesteuerung;

Figur 4    eine Tabelle des Status eines Ablaufes einer Identifikationsstrategie;

Figur 5    eine Ansicht der Zustandsabläufe der Identifikationsstrategie gemäß Figur 4;

Figur 6    eine Ansicht der Übergangsbedingungen der Zustände gemäß der Figuren 4 und 5;

Figur 7    einen Wählvorgang bei einer 5-2 Schaltung;

Figur 8    eine Schaltbewegung während einer 5-2-Schaltung;

Figur 9    ein Ablauf einer Identifikation der Wählaktorik bei einer 2-3-Schaltung;

Figur 10    ein Diagramm mit den temperaturabhängigen Modellparametern des Schalt- und Wählaktors;

Figur 11    ein Modell der Getriebemotoren;

Figur 12    ein weiteres diskretes Modell der Getriebemotoren;

Figur 13    zwei Diagramme mit einem Halteglied bei diskreter Abtastung; und

Figur 14    eine Simulation einer Sprungantwortfunktion eines realen und modellierten Systems.

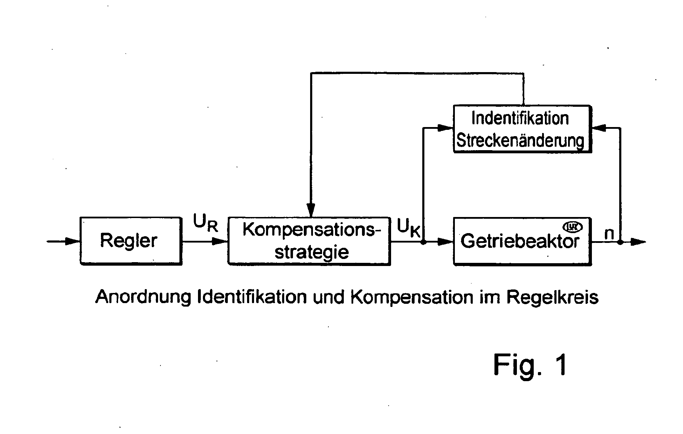

Ein mögliches Ablaufdiagramm der erfindungsgemäßen Kompensationsstrategie ist in Figur 1 schematisch dargestellt. Dort wird die Anordnung von Identifikation und Kompensation in einem entsprechenden Regelkreis angedeutet.

Diese Kompensationsstrategie beinhaltet eine Unterscheidung zwischen temporär auftretenden Temperatur bedingten Streckenänderungen und langfristig wirkenden vom Betrieb und der Hardware abhängigen Änderungen des Streckenverhaltens.

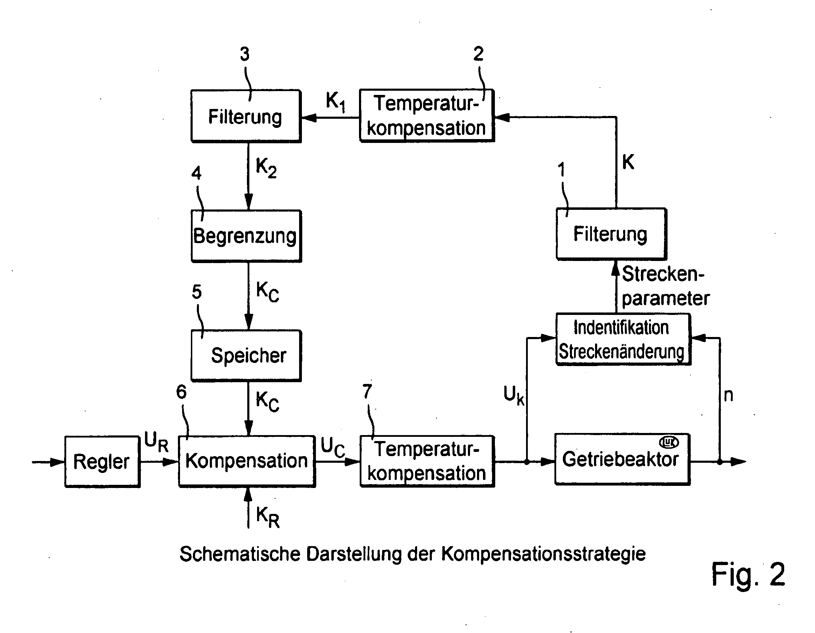

Eine mögliche statische Kompensationsstrategie kann bevorzugt folgende Schritte umfassen, welche schematisch in Figur 2 dargestellt sind, wobei die einzelnen Schritte mit 1 bis 6 durchnummeriert sind.

Nach einer erfolgreich durchgeführten Identifikation kann zunächst mit den neuen Modellparametern eine neue Streckenverstärkung k in einem ersten Schritt 1 berechnet werden, vgl. Figur 2.

In einem zweiten Schritt 2 wird die Streckenverstärkung k mit der schon in der Steuerungssoftware realisierten Temperaturkompensation 7 geeignet korrigiert, welche vor der Begrenzung der Lagereglerspannungen $U_R$, welche als Stellgrößen verwendet werden, auf die maximale Batteriespannung und der Umrechnung auf z.B. PWM-Größen (Pulsweitenmodulationsgrößen) erfolgt. Die durchgeführte Korrektur hat die Aufgabe, dass die langfristig wirkenden Streckenänderungen von den temperaturbedingten und temporär auftretenden Änderungen getrennt sowie die in der Temperaturkompensation 7 enthaltenden Unsicherheiten ausgeglichen werden. Eine mögliche Unsicherheit kann z.B. darin bestehen, dass die Kompensation auf der Grundlage der Getriebetemperatur erfolgt, welche in der Steuerungssoftware mit einem Temperaturmodell berechnet wird. Die Temperaturverhältnisse an den Getriebemotoren sind unter Umständen nicht bekannt. Aus regelungstechnischer Sicht kann die Temperaturkompensation somit nur die Funktion einer Vorsteuerung übernehmen, mit der aber bei einem Ausfall der Identifikation zumindest noch in einem gewissen Rahmen temperaturbedingte Streckenänderungen ausgeglichen werden können.

Die in einem dritten Schritt 3 der erfindungsgemäßen Kompensationsstrategie vorgenommene Filterung der Streckenverstärkung $K_1$ dient der Gewichtung neuer Verstärkungswerte und bestimmt somit die Adaptionsgeschwindigkeit der Kompensation an ein verändertes Streckenverhalten, wobei vorzugsweise ein diskreter Filter erster Ordnung verwendet wird. Es ist jedoch auch möglich andere Filter zur Filterung bei der erfindungsgemäßen Kompensationsstrategie zu verwenden. Die Filterkonstante kann z. B. konstant sein oder auch in Abhängigkeit von anderen Randbedingungen vorgegeben werden. Beispielsweise kann als Randbedingung die Temperatur, deren Änderung oder dgl. verwendet werden.

Der gefilterte Verstärkungswert $K_2$ kann anschließend auf einen definierten Wertebereich begrenzt werden, welches in einem vierten Schritt 4 durchgeführt wird. Damit können Aspekte, wie die Robustheit der Regelung oder der Schutz der Aktorik und der Getriebemotoren geeignet berücksichtigt werden. Die Robustheit der Regelung kann z. B. beeinträchtigt werden, wenn die Dynamik der Strecke erhöht wird; dies bedeutet, dass das System empfindlicher gegenüber Störungen ist und gleichzeitig die Streckenverstärkung durch die Kompensation erhöht wird, welches einer zusätzlichen Anregung des Systems entspricht.

Die Initialisierung aus der durchgeführten Begrenzung 4 resultierenden Kompensationsverstärkung $K_c$ kann vorzugsweise einmalig nach der Inbetriebnahme mit der Streckenverstärkung $K_r$ des Referenzmodells erfolgen. Die sich während des Betriebs normalerweise ändernde Kompensationsverstärkung kann im Rahmen eines fünften Schrittes 5 z. B. bei dem Zustand "Zündung aus" vorzugsweise in dem sogenannten EEProm gespeichert werden. Dieser gespeicherte Wert kann z.B. als Startwert beim nächsten Zustand "Zündung ein" verwendet werden. Temperaturbedingt auftretende Streckenänderungen zwischen den Zuständen "Zündung aus" und "Zündung ein" können dann durch die Temperaturkompensation 7 ausgeglichen werden. Zur Berücksichtigung der Unsicherheiten in der Temperaturkompensation können zudem Möglichkeiten vorgesehen werden, bei denen vorzugsweise der Verstärkungswert nur dann bei dem Zustand "Zündung aus" gespeichert wird, wenn die Getriebetemperatur innerhalb eines definierten Bereichs liegt und/oder eine bestimmte, vom Wert der Filterkonstante abhängige Anzahl erfolgreich durchgeführter Identifikationen vorliegen. Es sind auch andere Möglichkeiten zur Berücksichtigung der Unsicherheiten in der Temperaturkompensation denkbar.

In einem letzten Schritt 6 der erfindungsgemäßen Strategie kann z. B. die eigentliche statische Kompensation der Lagereglerspannung $U_R$ durchgeführt werden. Die kompensierte Spannung $U_c$ kann dabei aus dem Produkt von $U_R$ und dem Verhältnis $K_R/K_c$ resultieren.

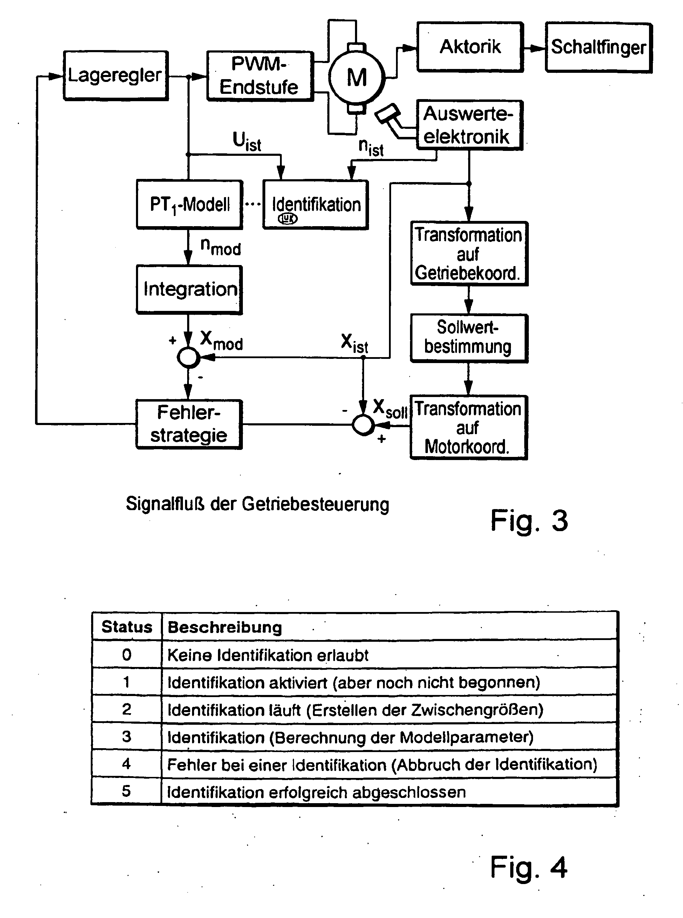

Es hat sich gezeigt, dass die vorher beschriebene Online-Identifikation zur Erfüllung der vorgenannten Anforderungen besonders vorteilhaft ist. Ein entsprechendes Signalflussdiagramm der Getriebesteuerung für eine Online-Identifikation der Getriebeaktorik ist in Figur 3 gezeigt. In Figur 3 ist die Lage der Identifikation im Signalflussplan der Inkrementalwegmessung dargestellt. Nur dann, wenn keine Fehlererkennung vorliegt, wird während der Schalt- und Wählvorgänge die Motordrehzahl $n_{ist}$ und die Motorspannungen $u_{ist}$ der Getriebemotoren erfasst und jeweils nach einer abgeschlossenen Schaltung werden die ermittelten Modellparameter im $PT_1$- Glied des Modells entsprechend angepasst. Dies erfolgt unabhängig voneinander sowohl beim Schalt- als auch beim Wählmotor. Daraus ergibt sich, dass die in Figur 3 dargestellte Online-Identifikation sowohl für den Wähl- als auch für den Schaltaktor verwendbar ist.

Der Identifikationsablauf kann beispielsweise, wie in Figur 4 in einer Tabelle dargestellt, vorgesehen sein. Um einen geregelten Ablauf der Identifikation zu gewährleisten, kann es erforderlich sein, einen Status für die Identifikation einzuführen. Damit werden die einzelnen Zustände der Identifikation eindeutig identifiziert und der Ablauf geeignet gesteuert (Figur 4).

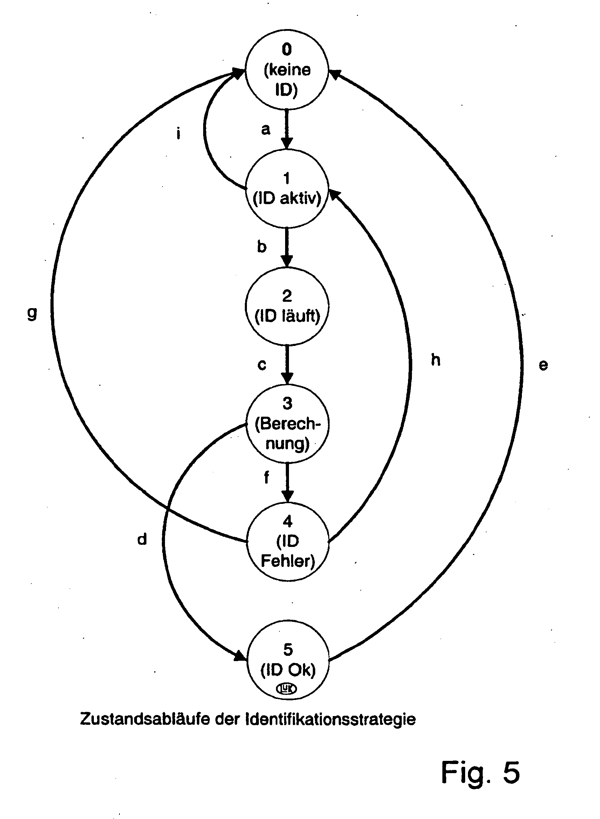

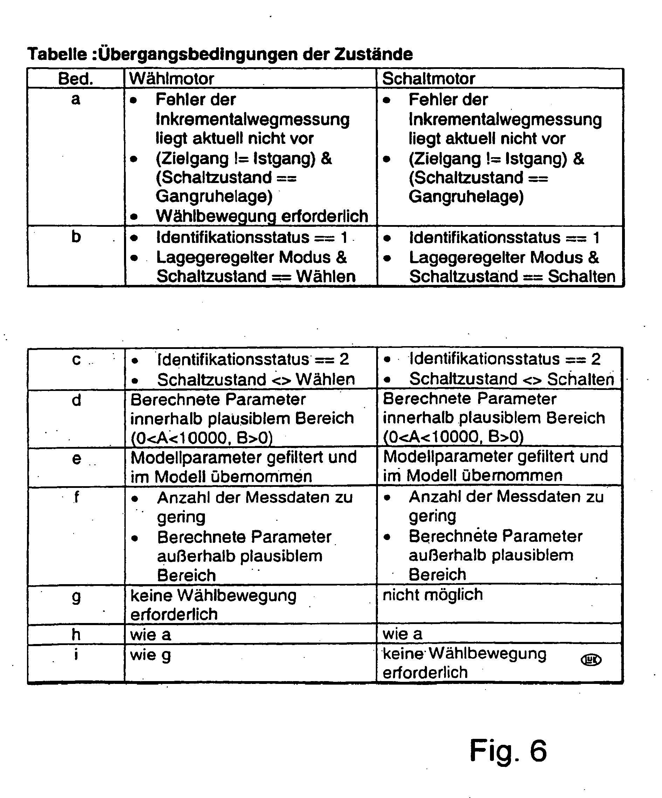

Figur 5 zeigt nun die möglichen Abläufe während einer erfindungsgemäßen Identifikationsstrategie in Form einer Zustandsdarstellung. Dabei sind die möglichen Eintrittsbedingungen für die einzelnen Zustände in einer in Figur 6 dargestellten Tabelle beschrieben. Der Ausgangszustand ist generell der Zustand 0 (keine Identifikation erlaubt). Wenn der Status auf 0 gesetzt wird, kann die Identifikation deaktiviert werden. Es ist denkbar, dass die Identifikation des Schalt- und Wählmotors separat aktiviert wird. Damit ist es möglich, bei Schaltungen, die keine Wählbewegungen erfordern, die Identifikation zu deaktivieren.

Die dazugehörigen Zustandsabläufe der erfindungsgemäßen Identifikationsstrategie sind in Figur 5 dargestellt, wobei entsprechende Übergangsbedingungen der Zustände in einer weiteren Tabelle gemäß Figur 6 angegeben sind.

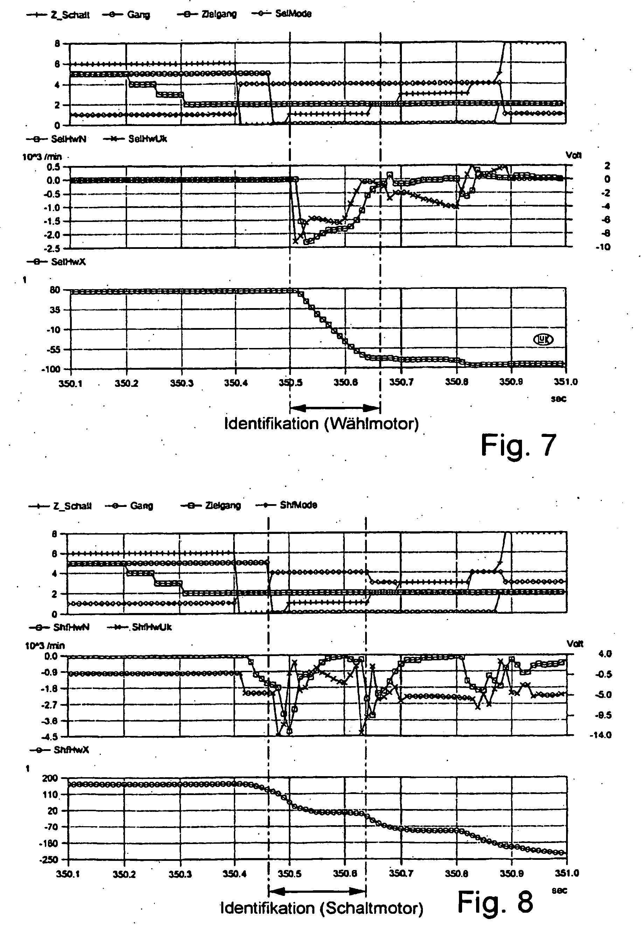

Darüber hinaus kann bei einer Fehlererkennung der Inkrementalwegmessung durch das Modell der Getriebemotoren die Identifikation z.B. abgebrochen werden. Bei dem Zustand 2 werden die Drehzahlen und die Motorspannungen erfasst und die Zwischengrößen der Identifikation berechnet. Bei dem Zustand 3 werden die in Status 2 ermittelten Zwischengrößen verwendet, um die Modellparameter (A, B) zu berechnen. Wenn die berechneten Modellparameter in einem plausiblen Bereich liegen (siehe Figur 7) kann der Identifikationsstatus z.B. auf 5 gesetzt werden. Damit kann die Identifikation erfolgreich abgeschlossen werden und die identifizierten Modellparameter können in vorteilhafter Weise weiter verwendet werden.

In Figur 7 ist beispielsweise ein Wählvorgang einer 5-2-Schaltung dargestellt. In Figur 8 ist die komplette Schaltbewegung während der 5-2-Schaltung gezeigt. Dabei sind deutlich die einzelnen Schaltzustände zu erkennen:

| | |
|---|---|
| Gang herausnehmen | (Z_Schalt = 0) |
| Wählen in Neutralbereich | (Z_Schalt = 1) |
| Synchronisieren | (Z_Schalt = 2) |
| Ruhelage einlegen | (Z_Schalt = 4) |
| Ruhelage erreicht | (Z_Schalt = 6) |
| Tasten im Gang | (Z_Schalt = 8) |

Bei möglichen Fehlern können zusätzlich die Zustände Sync-Problem (3) und Einspur-Problem (5) auftreten.

Im Schaltzustand 1 findet die freilaufende Wählbewegung des Wählmotors innerhalb der Neutralgasse statt, während die Schaltbewegung in Richtung Neutralgasse Schaltzustand 0 und Schaltzustand = 1 erfolgt. Dabei sollten sich die Motoren im lagergeregelten Modus (SelMode = 4 und ShfMode = 4) befinden. In diesem Bereich kann die Identifikation und auch die Modellierung der Getriebeaktorik stattfinden. Auch die Vorspannung des Schaltmotors bei ca. 2 bis 4 V zeigt keine Beeinflussung bezüglich der Identifikationsparameter. Da sich die Motoren auch nicht im lagegeregelten Modus befinden, kann die Identifikation nicht gestartet werden.

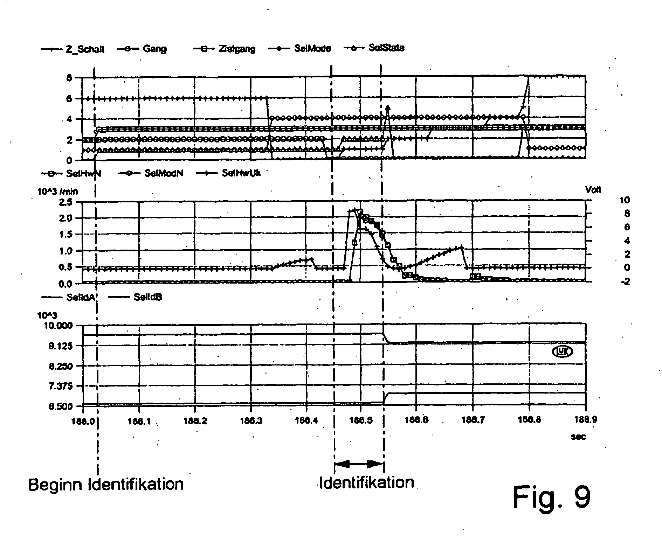

In Figur 9 ist eine mögliche Identifikationsstrategie bei der Wählaktorik während einer 2-3-Schaltung dargestellt. Bei Änderungen des Zielganges wird die Identifikation aktiviert (SelState = 1). Wenn der Schaltzustand auf Schalten/Wählen (Z_Schalt = 1) vorgesehen ist, kann die Identifikation gestartet werden. Dabei werden die Motorspannungen sowie die Motordrehzahlen eingelesen und die Zwischengrößen berechnet. Wenn die freilaufende Wählbewegung abgeschlossen ist (Z_Schalt = 2), können die Parameter A (SelldA) und der Parameter B (SelldB) ermittelt werden. Danach wird die Identifikation z.B. deaktiviert (SelState = 0).

Im Rahmen einer vorteilhaften Weiterbildung der Erfindung können Zusatzstrategien vorgesehen werden. Beispielsweise kann die Richtigkeit einer Identifikation überprüft werden. Die Voraussetzung einer Berechnung der Parameter ist z.B. die korrekte Ermittlung der Zwischengrößen. Um dies zu gewährleisten, kann es erforderlich sein, vor einer Parameterberechnung einige Sicherheitsmaßnahmen durchzuführen, wobei nachfolgend beispielhaft Sicherheitsmaßnahmen genannt werden, wobei die Aufzählung der nachfolgenden Sicherheitsmaßnahmen nicht abschließend ist:

1. Anzahl der Messdaten sind zu gering; die Zwischengrößen werden über die eingelesenen Wertepaare von Motorspannung und Motordrehzahl z.B. berechnet. Wenn die Anzahl der Messdaten nicht ausreichend ist, kann eine sichere Identifikation nicht gewährleistet werden. Daher kann vorzugsweise kontrolliert werden, ob sich die Anzahl über einer vorgegebenen Schwelle befindet. Diese Schwelle kann erfahrungsgemäß z.B. auf 10 Wertepaare festgesetzt werden. Es sind auch andere Werte für die Schwelle möglich. Wenn die Anzahl nach einer Schaltung kleiner als 10 ist, werden keine neuen Parameter identifiziert. Die Modellparameter können dann ihre alten Werte behalten. Die Identifikation kann z.B. abgebrochen werden und die Parameter werden damit nicht aktualisiert (SelState = 4). Wenn die Anzahl der Messdaten zu gering sind und somit keine Identifikation durchgeführt wird, kann ein Abbruch der Identifikation provoziert werden, indem die Anzahl der zu messenden Wertepaare (SelHwN, SelHwUk) erhöht wird (Mindestanzahl = 20 Wertepaare). Dabei kann es bei dieser Schaltung zu einem Abbruch der Identifikation kommen, da die Anzahl der Wertepaare (während SelState = 2) gleich 12 ist. Somit gilt der SelState auf dem Wert 4 (entspricht Fehler in der Identifikation). Dabei können die Parameter konstant bleiben und den bereits ermittelten Wert behalten und nicht aktualisiert werden.

2. Ein Überlauf der Zwischengrößen; die Zwischengrößen errechnen sich durch eine Summierung von Messwerten. Daher kann die Gefahr bestehen, dass die Zwischengrößen überlaufen. Um einen Überlauf zu erkennen, kann vor jeder Summierung z.B. kontrolliert werden, ob der Wertebereich überschritten wird. Erst wenn der Wertebereich nicht überschritten wird, kann z.B. die Summierung durchgeführt werden. Ansonsten kann die Summierung abgebrochen und die bereits berechneten Werte der Zwischengröße verwendet werden, um die aktuellen Modellparameter noch zu ermitteln. In diesem Fall werden die Parameter nicht aktualisiert. Wenn die Anzahl der Messdaten aber ausreichend ist, kann vorgesehen sein, dass nach dem Abbruch der Identifikation dennoch mit den bereits berechneten Summationsgrößen neue Parameter berechnet werden (ShfState = 5).

Es ist auch möglich, dass andere als die beiden vorgenannten Sicherheitsmaßnahmen bei der erfindungsgemäßen Strategie verwendet werden.

Hinsichtlich einer Initialisierung kann vorgesehen sein, dass die Modellparameter z.B. nach dem Zustand "Zündung-Ein" neu ermittelt werden. Dies bedeutet, dass sie nicht bei dem Zustand "Zündung-Aus" in den EEProm (elektronischer Speicher) abgespeichert werden. Dies deshalb, weil die Parameter sich in dem Zustand "Zündung-Aus", z.B. wenn das Fahrzeug über Nacht abgestellt wird, erheblich ändern können, dass bei dem Zustand "Zündung-Ein" diese nicht mehr für die Fehlererkennung verwendet werden können. Folgende Initialisierungsroutine kann daher vorzugsweise durchlaufen werden:

1. Nach der ersten erfolgreichen Identifikation können die Modellparameter aus den identifizierten Parametern übernommen werden, d.h. $P_{mod} = P_{ident}$ ;

2. Das Modell zur Fehlererkennung der Inkrementalwegmessung ist jedoch noch deaktiviert;

3. Nach jeder erfolgreichen Identifikation können die Modellparameter gefiltert werden;

4.Z. B. nach drei erfolgreichen Identifikationen kann das Modell zur Fehlererkennung aktiviert werden.

Dies bedeutet, dass das Modell z. B. nach jedem Zustand "Zündung-Ein" eine Totzeit von drei erfolgreichen Identifikationen durchlaufen kann, bis sich die Parameter auf zuverlässige Werte eingestellt haben. Erst dann kann das Modell und damit die Fehlererkennung der Inkrementalwegmessung aktiviert werden. Es ist auch denkbar, dass andere Initialisierungsroutinen oder auch beliebige Kombinationen von anderen möglichen Routinen verwendet werden können.

Die schon unter 3. bei der vorgenannten Initialisierungsroutine genannte Filterung kann z.B. auf Grund der Robustheit der identifizierten Modellparameter die Modelle der Schalt- und Wählaktorik erst nach drei erfolgreich durchgeführten Identifikationen durchgeführt werden. Da eine geringfügige Streuung bezüglich der identifizierten Parameter vorliegt, kann es vorteilhaft sein, die neu identifizierten Parameter mit denen der vorher bereits identifizierten Parameter zu gewichten. Dabei kann zwischen Modellparametern $P_{mod}$ und Identifikationsparametern $P_{ident}$ unterschieden werden. Die Identifikationsparameter werden nach jeder Schaltung mit der Berechnungsroutine ermittelt. Die Modellparameter sind die Parameter, die für die implementierten Modelle der Schalt- und Wählaktoren verwendet werden können. Diese können sich z.B. nur nach jeder erfolgreich durchgeführten Identifikation wie folgt berechnen:

$$P_{Mod} = P_{mod} \times \frac{2}{3} + P_{Ident} \times \frac{1}{3} \qquad\qquad \text{Gl. 3.1}$$

Dies bedeutet, dass die bereits im Modell verwendeten Parameter z.B. zu 2/3 und die nach einer Schaltung neu ermittelten Parameter vorzugsweise zu 1/3 übernommen werden, um die aktuellen Modellparameter zu berechnen.

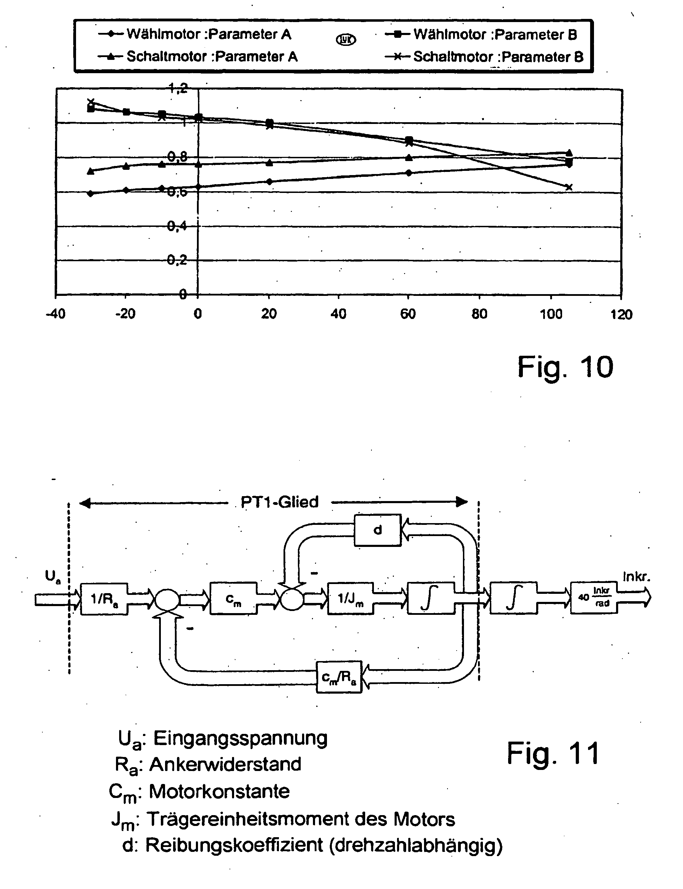

Um die Robustheit der Modelle hinsichtlich von Streckenänderungen auf Grund Temperaturunterschiede zu verifizieren, können Schaltungen in einer Klimakammer bei Temperaturen von -30° C bis 105° C durchgeführt werden. Dabei hat sich gezeigt, dass bei identischen Schaltzyklen die mittleren Modellparameter A und B für Schalt- und Wählaktoren bei unterschiedlichen Temperaturen aufgenommen sind. Die Streuungen bezüglich der einzelnen Identifikationen betragen etwa 5 - 8%. Das Ergebnis der gemittelten Modellparameter ist in Figur 10 dargestellt. Daraus ist ersichtlich, dass nur durch eine erfindungsgemäße Online-Identifikation der Getriebemotoren und einer geeignete Adaption der Motormodelle die Fehlererkennung der Inkrementalwegmessung in vorteilhafter Weise robust gehalten werden können. Es ist auch eine spezielle Situation denkbar, bei der die Identifikations- und Modellierungsstrategie nach einem Reset darstellt wird. Nach einem Reset werden die Modellparameter auf 0 zurückgesetzt und das Modell deaktiviert. Dies kann die Unsicherheiten des Streckenverhaltens bezüglich der Modellierung nach einem Reset verringern. Nach drei erfolgreichen Identifikationen kann das Modell dann wieder aktiviert werden. Dabei wurden auch die Werte der identifizierten Modellparameter in die Ausgabe der Langzeitmessung übernommen, um eine langfristige Beobachtung und Diagnose stellen zu können.

Insgesamt hat sich gezeigt, dass die Online-Identifikation der Aktormodelle eine robuste Fehlererkennung der Inkrementalwergmessung ermöglicht, da während des Betriebs eine Identifikation des Streckenverhaltens durchgeführt wird. Es werden somit Streckenänderung bedingt durch Temperatureinflüssen, Lebensdauer sowie Fertigungsstreuung der Getriebemotoren geeignet berücksichtigt. Es ist möglich, dass über das identifizierte Verhalten der Strecke eine Adaption des Lagereglers zusätzlich durchgeführt wird. Auf diese Weise ist ein optimales Regelverhalten zu realisieren. Die Kompensationsstrategie für den Lageregler verwendet ebenfalls die identifizierten Parameter der Getriebeaktorik, um die Änderungen der Strecke durch eine Änderung der Lagereglerspannung zu kompensieren.

Zusammenfassend kann festgestellt werden, dass es die entwickelte Online-Identifikation für die Getriebeaktoren ermöglicht, die Modelle auf Grund von Änderungen des Streckenverhaltens zu adaptieren. Somit ist eine langfristige Adaption und eine ausreichende Robustheit der Modelle gewährleistet.

Über die Aktorik können die Gleichstrommotoren der Getriebeaktoren den Schaltfinger in der Kulisse bewegen. Die Drehzahl und Positionen werden über Hallsensoren direkt an den Motoren gemessen. Die Getriebeaktorik zeigt bezüglich der Ankerspannung und der Motordrehzahl ein $PT_1$-Verhalten, wenn der Schaltfinger in der Schaltkulisse freilaufend verfährt. Bezüglich der Motorposition zeigen die Motoren ein sogenanntes $IT_1$-Verhalten. Dies bedeutet, dass eine Reihenschaltung eines $PT_1$-Glieds und eines Integrators vorgesehen ist. Dies ist auch in Figur 11 dargestellt. Dort wird das Streckenverhalten der Getriebeaktoren geeignet modelliert.

Die Gleichungen für das in Figur 11 dargestellte Motormodell lauten wie folgt:

$$0$$

$$U_a = R_a \cdot i_a + \cancel{L_a \cdot \dot{i}_a} + c_m \cdot \omega_m \qquad \text{Gl. 1.1}$$

$$M_m = c_m \cdot i_a \qquad \text{Gl. 1.2}$$

$$J_m \cdot \dot{\omega}_m = M_m - d \cdot \omega_m \qquad \text{Gl. 1.3}$$

Auf Grund der vernachlässigbar kleinen Induktivität $L_a$ ($L_a/R_a \sim 0{,}0008$) kann der in Gleichung 1.1 gebildete Term gleich 0 gesetzt werden. Die Vernachlässigung der Induktivität kann auch während des eigentlichen Reglerentwurfs durchgeführt werden. Eine kontinuierliche Zustandsdarstellung kann durch folgende Gleichung angegeben werden:

$$\begin{bmatrix} \dot{n} \\ \dot{x} \end{bmatrix} = \begin{bmatrix} -\dfrac{c_m^2}{R_a \cdot J_m} - \dfrac{d}{J_m} & 0 \\ \dfrac{N_{puls}}{60} & 0 \end{bmatrix} \cdot \begin{bmatrix} n \\ x \end{bmatrix} + \begin{bmatrix} \dfrac{c_m}{R_a \cdot J_m} \cdot \dfrac{60}{2\pi} \\ 0 \end{bmatrix} \cdot U_a \qquad \text{Gl. 1.4}$$

wobei

$\omega_m$: Drehgeschwindigkeit Motor

n: Motordrehzahl der Getriebemotoren [1/min]

x: Motorposition [Inkremente]

Npuls: Anzahl der Motorinkremente pro Umdrehung

Eine kontinuierliche Bewegungsgleichung kann dann wie folgt lauten:

$$\dot{n} = \underbrace{\left( -\frac{c_m^2}{R_a \cdot J_m} - \frac{d}{J_m} \right)}_{ak} \cdot n + \underbrace{\left( \frac{c_m}{R_a \cdot J_m} \cdot \frac{60}{2\pi} \right)}_{bk} \cdot U_a \qquad \text{Gl. 1.5}$$

$$\dot{x} = \underbrace{\frac{N_{puls}}{60}}_{K} \cdot n \qquad \text{Gl. 1.6}$$

11

$$\Rightarrow \dot{n} = a_k \cdot n + b_k \cdot U_a \qquad\qquad \text{Gl. 1.7}$$

$$\dot{x} = K \cdot n \qquad\qquad \text{Gl. 1.8}$$

Eine diskrete Darstellung der Bewegungsgleichung 1.7 bzw. 1.8 zeigen die schon vorher erwähnten Gleichungen:

$$n_k = A \cdot n_{k-1} + B \cdot u_{k-1} \qquad\qquad \text{Gl. 1.9}$$

$$x_k = x_{k-1} + K \cdot T_A \cdot n_k \qquad\qquad \text{Gl. 1.10}$$

wobei

A : Modellparameter für die Dynamik der Strecke

B : Modellparameter für die Streckenverstärkung

TA: Abtastzeit (5ms)

K : Umrechnungsfaktor zwischen Motordrehzahl und Motorinkremente = Npuls/60

n : Motordrehzahl (k : aktueller Interrupt, k-1 : Lageregler-Interrupt zuvor)

x : Motorinkremente (k : aktueller Interrupt, k-1 : Lageregler-Interrupt zuvor)

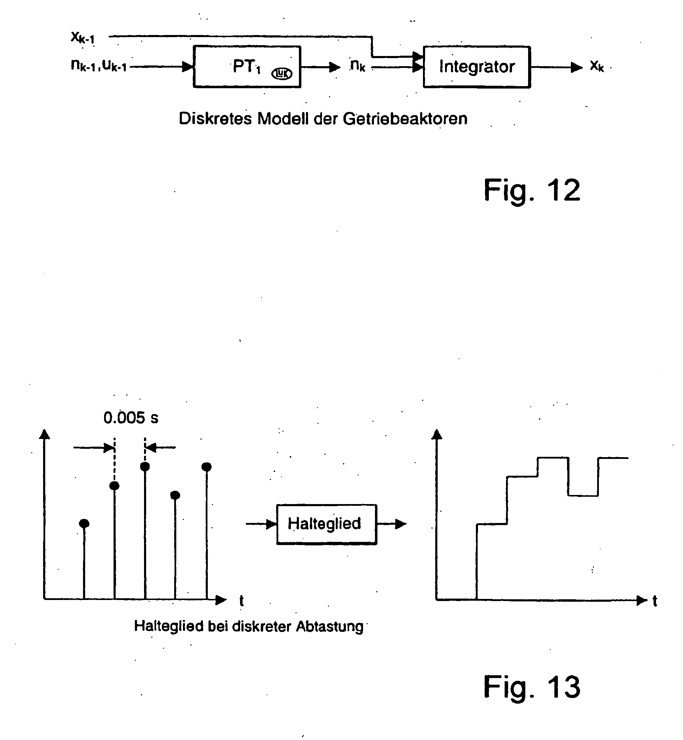

In Figur 12 sind beispielhaft diskrete Module der Getriebemotoren graphisch dargestellt. Das dynamische Systemverhalten kann z. B. durch den Parameter A wiedergegeben werden, während durch den Parameter B die Verstärkung des Systems dargestellt wird. Die Umrechnung der Motordrehzahlen in Inkremente kann durch einen Integrator oder dgl. (Gleichung 1.6) erfolgen. Dabei kann es einen konstanten Umrechnungsfaktor K zwischen Anzahl der Inkremente pro Umdrehung und eine konstante Abtastzeit von z. B. 5ms (Einlesen der Messdaten) geben. In Figur 12 sind beispielhaft diskrete Module der Bewegungsgleichungen 1.5 und 1.6 graphisch dargestellt.
Die dem Modell zugrundeliegende Differenzengleichung kann aus einem kontinuierlichen Verzögerungsglied z.B. einem PT$_1$-Glied und einem Halteglied nullter Ordnung entstehen. Dies ist in Figur 13 graphisch angedeutet, wobei ein Halteglied mit diskreter Abtastung verwendet wird.
Nachfolgend ist eine Identifikation eines Systems erster Ordnung (Least-Square-Verfahren) beschrieben. Ein einfaches und leicht zu implementierendes Identifikationsverfahren ist das sogenannte Least-Square-Verfahren (LS-Verfahren). Ein Spezialfall kann das Verfahren der kleinsten Fehlerquadrate für ein System erster Ordnung sein. Es ergeben sich folgende Gleichungen:

$$n_u(k) = A \cdot n_u(k-1) + B \cdot u(k-1) \qquad\qquad \text{Gl. 2.11}$$

$$n(k) = n_u(k) + z(k) \qquad\qquad \text{Gl. 2.2}$$

k : diskreter Zeitpunkt

n : Drehzahl

u : Eingangsspannung

z : Störungssignal (weißes Rauschen)

Diese Differenzgleichung 2.1 kann aus einem kontinuierlichen Verzögerungsglied z.B. einem PT1-Glied und einem Halteglied nullter Ordnung entstehen. Dies ist in Figur 18 graphisch angedeutet, wobei ein Halteglied mit diskreter Abtastung verwendet wird. Der Ausgang des Verzögerungsgliedes nu kann gemäß Gleichung 2.2 vorzugsweise noch mit einer Störung z versehen sein. Diese Störung z kann die Unsicherheiten des Systems, wie z.B. Reibung oder dgl., und der Signalverarbeitung, z.B. Messrauschen oder dgl., darstellen. Die Parameter A und B der obigen Bewegungsgleichung 2.1 können folgendermaßen identifiziert werden:

1. Aufsummieren von Zwischengrößen; während der Schalt- und Wählvorgänge können zu diskreten Abtastzeiten (Lageregler-Interrupt von etwa 5ms) die Motorspannung und die Motordrehzahl von Schalt- und Wählmotor eingelesen werden. Mit diesen Werten können folgende Zwischengrößen berechnet werden, wobei die nachfolgenden Gleichungen teilweise vorher verwendet worden sind:

$$\Phi_{nn}(0) = \sum_{0}^{N-1} n(i) \cdot n(i) \qquad \text{Gl. 2.3}$$

$$\Phi_{un}(0) = \sum_{0}^{N-1} n(i) \cdot u(i) \qquad \text{Gl. 2.4}$$

$$\Phi_{uu}(0) = \sum_{0}^{N-1} u(i) \cdot u(i) \qquad \text{Gl. 2.5}$$

$$\Phi_{nn}(1) = \sum_{1}^{N} n(i) \cdot n(i-1) \qquad \text{Gl. 2.6}$$

$$\Phi_{un}(1) = \sum_{1}^{N} n(i) \cdot u(i-1) \qquad \text{Gl.2.7}$$

2. Es kann eine Berechnung von Modellparametern vorgesehen sein; wenn die Berechnung der Zwischengröße nach der freilaufenden Bewegung des Schalt- und Wählvorganges abgeschlossen ist, können die Parameter A und B durch die bereits erwähnten Gleichungen bevorzugt berechnet werden;

$$A = \frac{-\Phi_{uu}(0) \cdot \Phi_{nn}(1) + \Phi_{un}(0) \cdot \Phi_{un}(1)}{\Phi_{uu}(0) \cdot \Phi_{nn}(0) - [\Phi_{un}(0)]^2} \qquad \text{Gl. 2.8}$$

$$B = \frac{-\Phi_{un}(0)\cdot\Phi_{nn}(1) + \Phi_{nn}(0)\cdot\Phi_{un}(1)}{\Phi_{uu}(0)\cdot\Phi_{nn}(0) - [\Phi_{un}(0)]^2} \qquad \text{Gl. 2.9}$$

3. Es kann eine Modellierung der Getriebemotoren vorgesehen sein;
das Modell der Motoren kann sich vorzugsweise aus einem PT1-Glied und einem Integrator zusammensetzen. Die aktuelle Motordrehzahl kann sich dann aus der Motordrehzahl und der Motorspannung eines Interrupts von z.B. 5ms berechnen. Dazu können die bereits erwähnten Gleichungen verwendet werden:

$$n_k = A \cdot n_{k-1} + B \cdot u_{k-1} \qquad \text{Gl. 2.10}$$

$$x_k = x_{k-1} + K \cdot T_A \cdot n_k \qquad \text{Gl. 2.11}$$

K : Umrechnungsfaktor (Motor-Aktorik-Übersetzung)

TA: Abtastzeit (Lagereglerinterrupt ; 5ms)

nk: modellierte Motordrehzahl

xk : modellierte Motorinkremente

Die vorgenannte Identifikationsstrategie kann durch eine Simulation überprüft werden. Bei der Simulation wird ein lagegeregelter Vorgang durchgeführt. Die ausgegebenen Spannungen und Motordrehzahlen können für eine Identifikation verwendet werden. Die identifizierten Parameter können in einem Modell der Getriebemotoren eingesetzt werden. Bei einer weiteren Simulation ist es möglich, die realen und die modellierten Motordrehzahlen und Positionen zu vergleichen, um die Genauigkeit der Identifikation zu überprüfen. Die Identifikation kann in der diskreten Darstellung erfolgen, während die Simulation mit kontinuierlichen Parametern durchgeführt wird. Daher ist es notwendig, die identifizierten Parameter in die kontinuierliche Darstellung umzurechnen. Die realen Parameter werden über Motorkennlinien und Datenvorgabe in das Modell eingesetzt.
Beispielsweise: Wählmotor

Ra = O,45Ω

Cm = 0,025Vs

$$Jm = 1{,}16 \cdot 10^{-5} \frac{kg}{m^2}$$

dreib = 0,8·10⁻⁴ *Nms*

Die kontinuierliche Darstellung ist wie folgt:

| | | |
|---|---|---|
| Reale Parameter | ak = -91,8 | bk = 3472,2 |
| Identifizierte Parameter | ak = -91,8 | bk = 3472,2 |

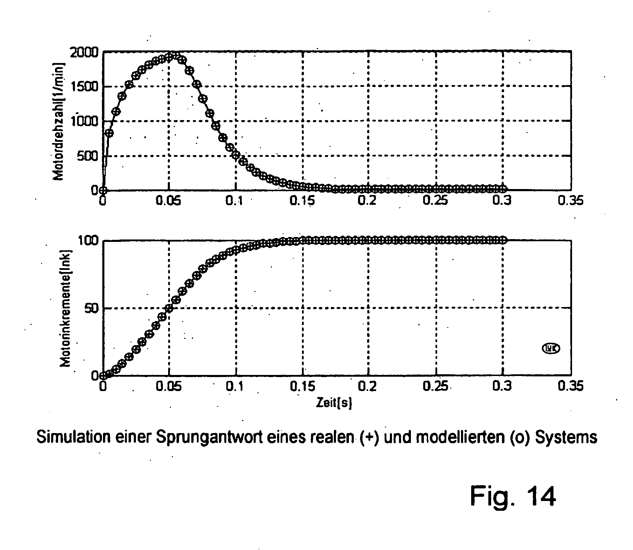

In Figur 14 ist eine simulierte Sprungantwort eines realen Systems und eines Systems mit identifizierten Parametern A, B dargestellt. Das PT$_1$-Verhalten kann exakt wiedergegeben werden. Bei einer Implementierung sollte allerdings beachtet werden, dass zum einen die Integerarithmetik verwendet werden muss und zum anderen sollte das reale System im Fahrzeug kein exaktes $PT_1$-Verhalten haben. Bei der Simulation in Figur 14 ist die Sprungantwort eines realen mit Pluszeichen und eines modellierten mit Nullen gekennzeichneten Systems dargestellt.

Die Simulation zeigt, dass diese Identifikationsmethode eines PT1-Systems eine sehr hohe Genauigkeit bei einfacher Programmierung aufweist.

Zusammenfassend kann festgestellt werden, dass die Online-Identifikation für die Getriebeaktoren besonders vorteilhaft ist, wenn zusätzlich eine Adaption vorgesehen ist. Das Streckenverhalten der ASG-Aktorik zeigt ein PT1-Verhalten bezüglich der Ankerspannung als Eingangsgröße und der Motordrehzahl als Ausgangsgröße bei freilaufender Bewegung innerhalb der Schaltkulisse.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombinationen zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

**Patentansprüche**

1. Verfahren zum Kompensieren von Streckenveränderungen bei einer Getriebesteuerung eines automatisierten Getriebes eines Fahrzeuges, wobei jede Streckenveränderung erkannt und ausgeglichen wird, **dadurch gekennzeichnet, dass** zumindest zwischen temporär auftretenden temperaturbedingten Streckenänderungen und langfristig wirkenden vom Betrieb und der Hardware abhängigen Änderungen des Streckenverhaltens unterschieden wird.

2. Verfahren nach Anspruch 1, **dadurch gekennzeichnet, dass** eine erkannte Streckenveränderung innerhalb des Regelkreises der Getriebesteuerung anhand eines Referenzmodells ausgeglichen wird, ohne dass eine Adaption der Reglerparameter durchgeführt wird.

3. Verfahren nach einem der vorangehenden Ansprüche, **dadurch gekennzeichnet, dass** die Kompensation an ein verändertes Streckenverhalten adaptiert wird.

4. Verfahren nach einem der vorangehenden Ansprüche, **dadurch gekennzeichnet, dass** die Kompensation der Streckenveränderungen begrenzt wird.

5. Verfahren nach einem der vorangehenden Ansprüche, **dadurch gekennzeichnet, dass** langfristig wirkende Streckenänderungen gespeichert werden.

6. Verfahren nach einem der vorangehenden Ansprüche, **dadurch gekennzeichnet, dass** zumindest ein parametrisches Modell der Getriebesteuerung verwendet wird.

7. Verfahren nach Anspruch 6, **dadurch gekennzeichnet, dass** die Parameter des Modells unter Berücksichtigung vorbestimmter Randbedingungen während eines Gangwechsels identifiziert werden.

8. Verfahren nach Anspruch 7, **dadurch gekennzeichnet, dass** ein Parameterschätzverfahren in die Getriebesteuerung implementiert wird.

9. Verfahren nach Anspruch 7 oder 8, **dadurch gekennzeichnet, dass** für die Identifikation der Modellparameter eine kompensierte und auf die maximale Batteriespannung begrenzte Spannung ($U_k$) und/oder zumindest eine gemessene Getriebemotordrehzahl (n) verwendet werden.

10. Verfahren nach einem der Ansprüche 7 bis 9, **dadurch gekennzeichnet, dass** zur dynamischen Kompensation die Abweichungen zwischen den identifizierten Modellparametern und den Parametern der Referenzmodelle verwendet werden.

11. Verfahren nach einem der vorangehenden Ansprüche, **dadurch gekennzeichnet, dass** die Kompensation in mehreren Schritten durchgeführt wird.

12. Verfahren nach Anspruch 11, **dadurch gekennzeichnet, dass** nach einer durchgeführten Identifikation der Modellparameter mit den identifizierten Modellparametern eine neue Streckenverstärkung (k) in einem ersten Schritt berechnet wird.

13. Verfahren nach Anspruch 11 oder 12, **dadurch gekennzeichnet, dass** in einem zweiten Schritt die Streckenverstärkung (k) mit einer durchgeführten Temperaturkompensation abgeglichen wird.

14. Verfahren nach Anspruch 13, **dadurch gekennzeichnet, dass** die Temperaturkompensation vor der Begrenzung der Lagereglerspannungen ($U_R$) durchgeführt wird.

15. Verfahren nach Anspruch 14, **dadurch gekennzeichnet, dass** zur Begrenzung der Lagereglerspannungen ($U_R$) als Stellgrößen die maximale Batteriespannung und die Umrechnung auf PWM-Größen verwendet werden.

16. Verfahren nach einem der Ansprüche 11 bis 15, **dadurch gekennzeichnet, dass** in einem dritten Schritt eine Filterung der Streckenverstärkung ($K_1$) durchgeführt wird.

17. Verfahren nach Anspruch 16, **dadurch gekennzeichnet, dass** ein diskreter Filter erster Ordnung mit einer konstanten Filterkonstante verwendet wird.

18. Verfahren nach einem der Ansprüche 11 bis 17, **dadurch gekennzeichnet, dass** in einem vierten Schritt ein gefilterter Verstärkungswert ($K_2$) auf einen definierten Wertebereich begrenzt wird.

19. Verfahren nach Anspruch 18, **dadurch gekennzeichnet, dass** die aus der durchgeführten Begrenzung resultierenden Kompensationsverstärkung ($K_c$) einmalig nach der Inbetriebnahme mit der Streckenverstärkung ($K_r$) des Referenzmodells durchgeführt wird.

20. Verfahren nach einem der Ansprüche 11 bis 19, **dadurch gekennzeichnet, dass** in einem fünften Schritt die sich während des Betriebs ändernde Kompensationsverstärkung ($K_c$) bei dem Zustand "Zündung aus" in dem EEProm gespeichert wird.

21. Verfahren nach Anspruch 20, **dadurch gekennzeichnet, dass** der gespeicherte Wert als Startwert beim nächsten Zustand "Zündung ein" verwendet wird.

22. Verfahren nach Anspruch 21, **dadurch gekennzeichnet, dass** temperaturbedingt auftretende Streckenveränderungen zwischen den Zuständen "Zündung aus" und "Zündung ein" durch eine Temperaturkompensation ausgeglichen werden.

23. Verfahren nach einem der Ansprüche 11 bis 22, **dadurch gekennzeichnet, dass** in einem sechsten Schritt eine statische Kompensation der Lagereglerspannung ($U_R$) durchgeführt wird.

24. Verfahren nach einem der vorangehenden Ansprüche, **dadurch gekennzeichnet, dass** während der Schalt- und Wählvorgänge die Signale der Eingangsspannung und/oder die Drehzahl der Getriebemotoren verwendet werden, um im Online-Zustand das Streckenverhalten der Motoren zu identifizieren.

25. Verfahren nach Anspruch 24, **dadurch gekennzeichnet, dass** ein diskretes Motormodell für die Getriebeaktorik verwendet wird.

**26.** Verfahren nach Anspruch 25, **dadurch gekennzeichnet, dass** bei dem Motormodell zumindest ein PT1-Glied und ein I-Glied verwendet wird.

**27.** Verfahren nach Anspruch 26, **dadurch gekennzeichnet, dass** die Eingangsspannung ($U_{k-1}$) und die Motordrehzahl ($N_{k-1}$) eines Lageregler-Interrupts zuvor erfasst wird, welche als Eingangsgrößen des PT1-Gliedes verwendet werden.

**28.** Verfahren nach Anspruch 26 oder 27, **dadurch gekennzeichnet, dass** die aktuell modellierte Motordrehzahl ($n_k$) von dem I-Glied (Integrator) in entsprechende Motorinkremente ($x_k$) umgerechnet werden.

**29.** Verfahren nach einem der Ansprüche 26 bis 28, **dadurch gekennzeichnet, dass** für das PT1-Glied folgende Gleichung verwendet wird:

$$n_k = A \cdot n_{k-1} + B \cdot u_{k-1}$$

**30.** Verfahren nach einem der Ansprüche 26 bis 29, **dadurch gekennzeichnet, dass** für das I-Glied folgende Gleichung verwendet wird:

$$x_k = x_{k-1} + K \cdot T_A \cdot n_k$$

**31.** Verfahren nach einem der Ansprüche 24 bis 30, **dadurch gekennzeichnet, dass** für die Online-Identifikation verschiedene Zustände definiert werden.

**32.** Verfahren nach Anspruch 31, **dadurch gekennzeichnet, dass** für die verschiedenen Zustände jeweils Übergangsbedingungen gewählt werden.

**33.** Verfahren nach einem der vorangehenden Ansprüche, **dadurch gekennzeichnet, dass** zum Abschätzen einer anliegenden Stromstärke bei einem Getriebemotor der Getriebeaktorik zumindest ein steuerungsseitiger Beobachter verwendet wird.

**34.** Verfahren nach Anspruch 33, **dadurch gekennzeichnet, dass** durch den Beobachter die Stromstärke jedes Getriebemotors abgeschätzt wird und eine steuerungsseitige Stromstärkenbegrenzung vorgesehen wird.

**35.** Verfahren nach Anspruch 34, **dadurch gekennzeichnet, dass** durch den Beobachter das Streckenverhalten jedes Getriebemotors identifiziert wird und die angeforderte Stromstärke über die ermittelten Streckenparameter abgeschätzt wird.

**36.** Verfahren nach Anspruch 35, **dadurch gekennzeichnet, dass** als Streckenparameter zumindest die angelegte Spannung und/oder die gemessene Motordrehzahl abgeschätzt werden.

**37.** Verfahren nach Anspruch 35 oder 36, **dadurch gekennzeichnet, dass** das Streckenverhalten jedes Getriebemotors mit zumindest einem $PT_1$-Modell mit variablen Parametern dargestellt wird.

**38.** Verfahren nach einem der Ansprüche 33 bis 37, **dadurch gekennzeichnet, dass** als Bewegungsgleichung für den Getriebemotor folgende Gleichung verwendet wird:

$$\dot{n} = a \cdot n + b \cdot u$$

**39.** Verfahren nach Anspruch 38, **dadurch gekennzeichnet, dass** die Parameter a und b während eines Gangwechsels im lagegeregelten Zustand identifiziert werden.

**40.** Verfahren nach einem der Ansprüche 33 bis 39, **dadurch gekennzeichnet, dass** die Motorspannung (U), die Motordrehzahl (n) und die Stromstärke (I) durch folgende Gleichung abgeschätzt werden:

$$I = \frac{U - k_\Phi \cdot \dfrac{2\pi}{60} n}{R}$$

**41.** Getriebesteuerung eines automatisierten Getriebes eines Fahrzeuges, insbesondere zum Durchführen des Verfahrens nach einem der Ansprüche 1 bis 40, mit zumindest einer Einrichtung zum Erkennen und Ausgleichen von Streckenveränderungen.

**Claims**

1. Method for the compensation of path changes in a transmission control of an automated transmission of a vehicle, each path change being detected and compensated, **characterized in that** a distinction is made at least between temporarily occurring temperature-induced path changes and changes in the path behaviour which act in the long term and are dependent on operation and hardware.

2. Method according to Claim 1, **characterized in that** a detected path change is compensated, within the control loop of the transmission control, by means of a reference model, without an adaptation of the controller parameters being carried out.

3. Method according to one of the preceding claims, **characterized in that** compensation is adapted to a changed path behaviour.

4. Method according to one of the preceding claims, **characterized in that** the compensation of the path changes is limited.

5. Method according to one of the preceding claims, **characterized in that** path changes acting in the long term are stored.

6. Method according to one of the preceding claims, **characterized in that** at least a parametric model of the transmission control is used.

7. Method according to Claim 6, **characterized in that** the parameters of the model are identified, taking into account predetermined boundary conditions, during a gear change.

8. Method according to Claim 7, **characterized in that** a parameter estimation method is implemented in the transmission control.

9. Method according to Claim 7 or 8, **characterized in that** a compensated voltage ($U_k$) limited to the maximum battery voltage and/or at least one measured transmission motor rotational speed (n) are/is used for identifying the model parameters.

10. Method according to one of Claims 7 to 9, **characterized in that** the deviations between the identified model parameters and the parameters of the reference models are used for dynamic compensation.

11. Method according to one of the preceding claims, **characterized in that** compensation is carried out in a plurality of steps.

12. Method according to Claim 11, **characterized in that,** after an identification of the model parameters has been carried out, a new path amplification (k) is calculated in a first step by means of the identified model parameters.

13. Method according to Claim 11 or 12, **characterized in that,** in a second step, the path amplification (k) is balanced by means of a temperature compensation carried out.

**14.** Method according to Claim 13, **characterized in that** the temperature compensation is carried out before the limitation of the position controller voltages ($U_R$).

**15.** Method according to Claim 14, **characterized in that** the maximum battery voltage and conversion to PWM variables are used as manipulated variables for limiting the position controller voltages ($U_R$).

**16.** Method according to one of Claims 11 to 15, **characterized in that,** in a third step, a filtering of the path amplification ($K_1$) is carried out.

**17.** Method according to Claim 16, **characterized in that** a discrete first-order filter with a constant filter constant is used.

**18.** Method according to one of Claims 11 to 17, **characterized in that,** in a fourth step, a filtered amplification value ($K_2$) is limited to a defined value range.

**19.** Method according to Claim 18, **characterized in that** the compensating amplification ($K_c$) resulting from the limitation carried out is carried out once after operation with the path amplification ($K_r$) of the reference model.

**20.** Method according to one of Claims 11 to 19, **characterized in that,** in a fifth step, the compensating amplification ($K_c$) changing during operation is stored in the "ignition off" state in the EEProm.

**21.** Method according to Claim 20, **characterized in that** the stored value is used as a starting value in the next "ignition on" state.

**22.** Method according to Claim 21, **characterized in that** path changes occurring, temperature-induced, between the "ignition off" and "ignition on" states are compensated by means of temperature compensation.

**23.** Method according to one of Claims 11 to 22, **characterized in that,** in a sixth step, a static compensation of the position controller voltage ($U_R$) is carried out.

**24.** Method according to one of the preceding claims, **characterized in that,** during the shift and selection actions, the signals of the input voltage and/or the rotational speed of the transmission motors are used in order to identify the path behaviour of the motors in the on-line state.

**25.** Method according to Claim 24, **characterized in that** a discrete motor model is used for the transmission actuator assembly.

**26.** Method according to Claim 25, **characterized in that** at least one PT1 element and one I element are used in the motor model.

**27.** Method according to Claim 26, **characterized in that** the input voltage ($u_{k-1}$) and the motor rotational speed ($n_{k-1}$) of a position controller interrupt, which are used as input variables of the PT1 element, are detected beforehand.

**28.** Method according to Claim 26 or 27, **characterized in that** the currently modelled motor rotational speed ($n_k$) is converted into corresponding motor increments ($x_k$) by the I element (integrator).

**29.** Method according to one of Claims 26 to 28, **characterized in that** the following equation is used for the PT1 element:

$$n_k = A \cdot n_{k-1} + B \cdot u_{k-1}$$

**30.** Method according to one of Claims 26 to 29, **characterized in that** the following equation is used for the I element:

$$x_k = x_{k-1} + K \cdot T_A \cdot n_k$$

**31.** Method according to one of Claims 24 to 30, **characterized in that** various states are defined for on-line identification.

**32.** Method according to Claim 31, **characterized in that** transitional conditions are selected in each case for the various states.

**33.** Method according to one of the preceding claims, **characterized in that** at least one control-side observer is used for estimating a prevailing current intensity in a transmission motor of the transmission actuator assembly.

**34.** Method according to Claim 33, **characterized in that** the current intensity of each transmission motor is estimated by the observer, and control-side current intensity limitation is provided.

**35.** Method according to Claim 34, **characterized in that** the path behaviour of each transmission motor is identified by the observer, and the required current intensity is estimated via the path parameters determined.

**36.** Method according to Claim 35, **characterized in that** at least the applied voltage and/or the measured motor rotational speed and/is estimated as path parameters.

**37.** Method according to Claim 35 or 36, **characterized in that** the path behaviour of each transmission motor is illustrated by means of at least one $PT_1$ model with variable parameters.

**38.** Method according to one of Claims 33 to 37, **characterized in that** the following equation is used as a motion equation for the transmission motor:

$$\dot{n} = a \cdot n + b \cdot u$$

**39.** Method according to Claim 38, **characterized in that** the parameters a and b are identified in the position-controlled state during a gear change.

**40.** Method according to one of Claims 33 to 39, **characterized in that** the motor voltage (U), the motor rotational speed (n) and the current intensity (I) are estimated by means of the following equation:

$$I = \frac{U - k_\Phi \cdot \frac{2\pi}{60} n}{R}$$

**41.** Transmission control of an automated transmission of a vehicle, in particular for carrying out the method according to one of Claims 1 to 40, with at least one device for the detection and compensation of path changes.

**Revendications**

**1.** Procédé pour compenser les changements de section dans une commande d'une transmission automatisée d'un véhicule, chaque changement de section étant détecté et compensé, **caractérisé en ce que** la différence est faite au moins entre les changements de section liés à la température qui se produisent temporairement et les modifications à long terme du comportement de section qui sont liées au fonctionnement et au matériel.

**2.** Procédé selon la revendication 1, **caractérisé en ce qu'**un changement de section détecté à l'intérieur d'un circuit de régulation de la commande de transmission est compensé au moyen d'un modèle de référence sans qu'une adaptation des paramètres de régulation ne soit effectuée.

**3.** Procédé selon l'une des revendications précédentes, **caractérisé en ce que** la compensation est adaptée à un comportement de section modifié.

4. Procédé selon l'une des revendications précédentes, **caractérisé en ce que** la compensation des changements de section est limitée.

5. Procédé selon l'une des revendications précédentes, **caractérisé en ce que** les changements de section agissant à long terme sont mémorisés.

6. Procédé selon l'une des revendications précédentes, **caractérisé en ce qu'**au moins un modèle paramétrique de la commande de transmission est utilisé.

7. Procédé selon la revendication 6, **caractérisé en ce que** les paramètres du modèle sont identifiés pendant un changement de rapport en tenant compte de conditions annexes prédéfinies.

8. Procédé selon la revendication 7, **caractérisé en ce qu'**un procédé d'évaluation des paramètres est mis en oeuvre dans la commande de transmission.

9. Procédé selon la revendication 7 ou 8, **caractérisé en ce qu'**une tension ($U_k$) compensée et limitée à la tension maximale de la batterie et/ou au moins une vitesse de rotation du motoréducteur (n) mesurée sont utilisées pour l'identification des paramètres du modèle.

10. Procédé selon l'une des revendications 7 à 9, **caractérisé en ce que** les écarts entre les paramètres identifiés du modèle et les paramètres des modèles de référence sont utilisés pour la compensation dynamique.

11. Procédé selon l'une des revendications précédentes, **caractérisé en ce que** la compensation est effectuée en plusieurs étapes.

12. Procédé selon la revendication 11, **caractérisé en ce qu'**après avoir effectué une identification des paramètres du modèle, une nouvelle amplification de la section (k) est calculée dans une première étape avec les paramètres identifiés du modèle.

13. Procédé selon la revendication 11 ou 12, **caractérisé en ce que,** dans une deuxième étape, l'amplification de la section (k) est compensée avec une compensation de température effectuée.

14. Procédé selon la revendication 13, **caractérisé en ce que** la compensation de température est effectuée avant la limitation des tensions du régulateur de position ($U_R$).

15. Procédé selon la revendication 14, **caractérisé en ce que** la tension maximale de la batterie et la conversion en grandeurs PWM sont utilisées comme grandeurs de commande pour la limitation des tensions du régulateur de position ($U_R$).

16. Procédé selon l'une des revendications 11 à 15, **caractérisé en ce qu'**un filtrage de l'amplification de section ($K_1$) est effectué dans une troisième étape.

17. Procédé selon la revendication 16, **caractérisé en ce qu'**un filtre discret du premier ordre avec une constante de filtre constante est utilisé.

18. Procédé selon l'une des revendications 11 à 17, **caractérisé en ce que** dans une quatrième étape, une valeur d'amplification filtrée ($K_2$) est limitée à une plage de valeurs définie.

19. Procédé selon la revendication 18, **caractérisé en ce que** l'amplification de la compensation ($K_c$) résultant de la limitation effectuée est réalisée une seule fois après la mise en service avec l'amplification de section ($K_r$) du modèle de référence.

20. Procédé selon l'une des revendications 11 à 19, **caractérisé en ce que** l'amplification de la compensation ($K_c$) qui varie pendant le fonctionnement est mémorisée dans l'EEProm au cours d'une cinquième étape en l'état « contact coupé ».

**21.** Procédé selon la revendication 20, **caractérisé en ce que** la valeur mémorisée est utilisée comme valeur de départ au prochain état « contact mis ».

**22.** Procédé selon la revendication 21, **caractérisé en ce que** les changements de section qui se produisent en raison de la température entre les états « contact coupé » et « contact mis » sont compensés par une compensation en température.

**23.** Procédé selon l'une des revendications 11 à 22, **caractérisé en ce qu'**une compensation statique de la tension du régulateur de position ($U_R$) est effectuée dans une sixième étape.

**24.** Procédé selon l'une des revendications précédentes, **caractérisé en ce que** les signaux de la tension d'entrée et/ou la vitesse de rotation des motoréducteurs sont utilisés pour identifier en direct le comportement de section des moteurs pendant les opérations de changement et de sélection de rapport.

**25.** Procédé selon la revendication 24, **caractérisé en ce qu'**un modèle de moteur discret est utilisé pour le dispositif d'actionnement de la transmission.

**26.** Procédé selon la revendication 25, **caractérisé en ce qu'**au moins un élément PT1 et un élément I sont utilisés pour le modèle de moteur.

**27.** Procédé selon la revendication 26, **caractérisé en ce que** la tension d'entrée ($U_{k-1}$) et la vitesse de rotation du moteur ($N_{k-1}$) d'une interruption du régulateur de position sont préalablement acquises, lesquelles sont utilisées comme grandeurs d'entrée de l'élément PT1.

**28.** Procédé selon la revendication 26 ou 27, **caractérisé en ce que** la vitesse de rotation ($n_k$) actuellement modélisée du moteur est convertie par l'élément I (intégrateur) en incréments de moteur ($x_k$) correspondants.

**29.** Procédé selon l'une des revendications 26 à 28, **caractérisé en ce que** l'équation suivante est utilisée pour l'élément PT1 :

$$n_k = A \cdot n_{k-1} + B \cdot u_{k-1}$$

**30.** Procédé selon l'une des revendications 26 à 29, **caractérisé en ce que** l'équation suivante est utilisée pour l'élément I :

$$x_k = x_{k-1} + K \cdot T_A \cdot n_k$$

**31.** Procédé selon l'une des revendications 24 à 30, **caractérisé en ce que** différents états sont définis pour l'identification en direct.

**32.** Procédé selon la revendication 31, **caractérisé en ce que** des conditions de transition sont respectivement choisies pour les différents états.

**33.** Procédé selon l'une des revendications précédentes, **caractérisé en ce qu'**au moins un observateur du côté de la commande est utilisé pour évaluer une intensité de courant appliquée à un motoréducteur du dispositif d'actionnement de la transmission.

**34.** Procédé selon la revendication 33, **caractérisé en ce que** l'intensité du courant de chaque motoréducteur est évaluée par l'observateur et il est prévu une limitation de l'intensité du courant du côté de la commande.

**35.** Procédé selon la revendication 34, **caractérisé en ce que** le comportement de section de chaque motoréducteur est identifié par l'observateur et l'intensité de courant requise est évaluée par le biais des paramètres de section déterminés.

**36.** Procédé selon la revendication 35, **caractérisé en ce que** les paramètres de section évalués sont au moins la tension appliquée et/ou la vitesse de rotation mesurée du moteur.

**37.** Procédé selon la revendication 35 ou 36, **caractérisé en ce que** le comportement de section de chaque motoréducteur est représenté par au moins un modèle $PT_1$ avec des paramètres variables.

**38.** Procédé selon l'une des revendications 33 à 37, **caractérisé en ce que** l'équation suivante est utilisée comme équation de mouvement pour le motoréducteur :

$$\dot{n} = a \cdot n + b \cdot u$$

**39.** Procédé selon la revendication 38, **caractérisé en ce que** les paramètres a et b sont identifiés pendant un changement de rapport en situation de régulation de la position.

**40.** Procédé selon l'une des revendications 33 à 39, **caractérisé en ce que** la tension du moteur (U), la vitesse de rotation du moteur (n) et l'intensité du courant (I) sont évaluées par l'équation suivante :

$$1 = \frac{U - k_\Phi \cdot \dfrac{2\pi}{60} n}{R}$$

**41.** Commande d'une transmission automatisée d'un véhicule, notamment pour mettre en oeuvre le procédé selon l'une des revendications 1 à 40, comprenant au moins un dispositif de détection et de compensation des changements de section.

Anordnung Identifikation und Kompensation im Regelkreis

Fig. 1

Schematische Darstellung der Kompensationsstrategie

**Fig. 2**

Signalfluß der Getriebesteuerung

Fig. 3

| Status | Beschreibung |
|--------|--------------|
| 0 | Keine Identifikation erlaubt |
| 1 | Identifikation aktiviert (aber noch nicht begonnen) |
| 2 | Identifikation läuft (Erstellen der Zwischengrößen) |
| 3 | Identifikation (Berechnung der Modellparameter) |
| 4 | Fehler bei einer Identifikation (Abbruch der Identifikation) |
| 5 | Identifikation erfolgreich abgeschlossen |

Fig. 4

Zustandsabläufe der Identifikationsstrategie

Fig. 5

## Tabelle :Übergangsbedingungen der Zustände

| Bed. | Wählmotor | Schaltmotor |
|---|---|---|
| a | • Fehler der Inkrementalwegmessung liegt aktuell nicht vor<br>• (Zielgang != Istgang) & (Schaltzustand == Gangruhelage)<br>• Wählbewegung erforderlich | • Fehler der Inkrementalwegmessung liegt aktuell nicht vor<br>• (Zielgang != Istgang) & (Schaltzustand == Gangruhelage) |
| b | • Identifikationsstatus == 1<br>• Lagegeregelter Modus & Schaltzustand == Wählen | • Identifikationsstatus == 1<br>• Lagegeregelter Modus & Schaltzustand == Schalten |
| c | • Identifikationsstatus == 2<br>• Schaltzustand <> Wählen | • Identifikationsstatus == 2<br>• Schaltzustand <> Schalten |
| d | Berechnete Parameter innerhalb plausiblem Bereich (0<A<10000, B>0) | Berechnete Parameter innerhalb plausiblem Bereich (0<A<10000, B>0) |
| e | Modellparameter gefiltert und im Modell übernommen | Modellparameter gefiltert und im Modell übernommen |
| f | • Anzahl der Messdaten zu gering<br>• Berechnete Parameter außerhalb plausiblem Bereich | • Anzahl der Messdaten zu gering<br>• Berechnete Parameter außerhalb plausiblem Bereich |
| g | keine Wählbewegung erforderlich | nicht möglich |
| h | wie a | wie a |
| i | wie g | keine Wählbewegung erforderlich |

## Fig. 6

Identifikation (Wählmotor)

Fig. 7

Identifikation (Schaltmotor)

Fig. 8

Fig. 9

Fig. 10

$U_a$: Eingangsspannung
$R_a$: Ankerwiderstand
$C_m$: Motorkonstante
$J_m$: Trägereinheitsmoment des Motors
d: Reibungskoeffizient (drehzahlabhängig)

Fig. 11

$X_{k-1}$

$n_{k-1}, u_{k-1}$ → | PT₁ (LuK) | → $n_k$ → | Integrator | → $X_k$

Diskretes Modell der Getriebeaktoren

Fig. 12

0.005 s

→ | Halteglied | →

Halteglied bei diskreter Abtastung

Fig. 13

Simulation einer Sprungantwort eines realen (+) und modellierten (o) Systems

Fig. 14

**EP 1 703 179 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19951953 A